# EUROPÄISCHE PATENTSCHRIFT

(11) **EP 3 914 484 B1**
(45) Veröffentlichungstag und Bekanntmachung des Hinweises auf die Patenterteilung: **04.10.2023**
(21) Anmeldenummer: 20701701.3
(22) Anmeldetag: 16.01.2020
(51) Int. Cl.: B60R 21/34

(54) **FRONTHAUBE FÜR EIN FAHRZEUG**
BONNET FOR A VEHICLE
CAPOT FRONTAL POUR UN VÉHICULE

(30) Priorität: 23.01.2019 DE 102019200765
(43) Veröffentlichungstag der Anmeldung: 01.12.2021
(73) Patentinhaber: VOLKSWAGEN AG, 38440 Wolfsburg (DE)
(72) Erfinder: WINKLER, Joachim, 38321 Denkte (DE); OLSCHEWSKI, Holger, 38116 Braunschweig (DE)
(74) Vertreter: Gulde & Partner
(86) Internationale Anmeldenummer: PCT/EP2020/050963
(87) Internationale Veröffentlichungsnummer: WO 2020/152014

(56) Entgegenhaltungen:
- EP-A1- 1 557 340
- EP-A1- 3 210 859
- WO-A1-2013/175086
- WO-A2-2008/062143
- DE-A1-102018 103 846
- DE-C2- 3 734 992

## Beschreibung

Die Erfindung betrifft eine Fronthaube für ein Fahrzeug.

Bei der Fahrzeugentwicklung spielt der Fußgängerschutz eine immer wichtigere Rolle. Dies führt auch zu gestiegenen Anforderungen an die Gestaltung von Fronthauben für Kraftfahrzeuge. So müssen Fronthauben neben den bekannten Anforderungen basierend auf Windlasten, dem Zuschlagen und dem Verhindern von Flattern der Haube nun zusätzlich im Bereich des vorn liegenden Schlosses die Energie eines Fußgängeraufpralls absorbieren und den Fußgänger schützen.

Es sind Systeme bekannt, die die Fronthaube im Falle eines Fußgängeraufpralles anheben, um so eine Knautschzone zur Aufnahme der Aufprallenergie des Fußgängers zu schaffen. Zudem ist bekannt, einen Scheibenairbag einzusetzen, der den Bereich der Frontscheibe und der A-Säule abdeckt, um im Falle eines frontalen Fußgängerunfalles den Kopf des Fußgängers vor einer Kollision mit diesen Bereichen zu schützen. Diese Maßnahmen sind sehr kostenintensiv und benötigen als aktive Komponenten zudem nachteilig eine Wartung und Funktionskontrolle.

In der DE 10 2014 003 199 A1 wird eine Fronthaube für ein Fahrzeug vorgeschlagen, die einen äußeren Rahmen und eine mittig angeordnete Öffnung dieses Rahmens aufweist. Die mittig angeordnete Öffnung des Rahmens wird dabei von Spriegeln überspannt.

In der DE 199 11 833 A1 wird ein Vorderwagenbereich eines Kraftfahrzeuges vorgestellt, der den Fußgängerschutz verbessern soll. Hierfür werden die dort befindlichen Bauteile, unter anderem also die Fronthaube, mittels Stoßabsorptionselementen befestigt, um Aufprallenergie aufnehmen zu können.

EP 1 557 340 A1 offenbart eine Fronthaube für ein Fahrzeug, umfassend eine Schlossbrücke, die sich quer zur Fahrzeuglängsrichtung erstreckt und ein Schlosselement aufweist, wobei die Schlossbrücke an mindestens zwei voneinander beabstandet angeordneten Befestigungspunkten mit der Fronthaube verbunden ist. Die Befestigung erfolgt über massive Befestigungselemente.

Der Erfindung liegt nun die Aufgabe zugrunde, eine Fronthaube für Fahrzeuge vorzuschlagen, die einen hohen Fußgängerschutz gewährleistet, einfach und kostengünstig herzustellen ist und eine geringe Ausfallwahrscheinlichkeit aufweist.

Die oben genannte Aufgabe wird durch die Merkmale des Anspruchs 1 gelöst.

Eine Fronthaube eines Fahrzeuges hat eine Außenhaut, zumeist mit auf der Innenseite angeordneten Verstärkungselementen. Diese sind dabei häufig stoffschlüssig mit der Außenhaut verbunden. Die Verstärkungselemente versteifen die Außenhaut und sollen ein Verbiegen der Fronthaube aufgrund von Windbelastungen oder auch ein Flattern durch eine dynamische Anregung verhindern.

Gleichfalls relevante Lastfälle sind das Öffnen und Schließen der Fronthaube oder auch Windbelastungen im geöffneten Zustand. Hier sind insbesondere auch Torsionsbelastungen, die beispielsweise durch eine seitliche Krafteinleitung in die Fronthaube zum Öffnen oder Schließen auftreten, zu berücksichtigen. Diese Gründe sprechen für eine möglichst steife Auslegung der Fronthaube.

Demgegenüber wird durch eine weiche Ausgestaltung der Fronthaube der Fußgängerschutz begünstigt.

Die erfindungsgemäße Fronthaube für ein Fahrzeug weist eine Schlossbrücke auf. Diese erstreckt sich quer zur Fahrzeuglängsrichtung und ist innenseitig an der Fronthaube angeordnet. Bevorzugt ist die Schlossbrücke auf der Innenseite der Fronthaube im in Fahrtrichtung vorderen Bereich angeordnet. Besonders bevorzugt ist die Schlossbrücke symmetrisch bezogen auf die Außenhaut der Fronthaube angeordnet.

Zur Klarstellung wird festgehalten, dass die Innenseite die dem Fahrzeuginnenraum zugewandte Seite der Fronthaube ist, also beispielsweise bei einer Motorhaube die dem Motor zugewandte Seite.

Erfindungsgemäß weist die Schlossbrücke ein Schlosselement auf. Das Schlosselement stellt eine lösbare Verbindung der Fronthaube mit dem Fahrzeug her, die durch ein Bedienelement lösbar ist.

Die Schlossbrücke ist dabei über mindestens zwei Befestigungspunkte mit der Fronthaube verbunden. Die Befestigungspunkte sind möglichst weit beabstandet angeordnet, um seitliche Krafteinleitungen sicher aufzunehmen. So wird vorteilhaft eine sichere Halterung der Motorhaube gewährleistet. Die Verbindung der Schlossbrücke erfolgt dabei bevorzugt mit den Verstärkungselementen der Fronthaube, da so vorteilhaft eine gute Krafteinleitung in die Fronthaube gewährleistet ist. Sie kann aber auch mit der Außenhaut der Fronthaube erfolgen.

Vorteilhaft kann durch den Einsatz einer Schlossbrücke eine zusätzliche Knautschzone als Fußgängerschutz geschaffen werden. Besonders vorteilhaft ist diese Knautschzone in dem für den Fußgängerschutz besonders relevanten Bereich angeordnet.

Erfindungsgemäß weist die Schlossbrücke mindestens eine Sollbruchstelle auf. Diese Sollbruchstelle führt zu einem Bruch der Schlossbrücke bei einer bestimmten Belastung und ermöglicht so vorteilhaft ein "Eintauchen" der Fronthaube im Kollisionsfall. Vorteilhaft kann so die Fronthaube um den von der Schlossbrücke geschaffenen Abstand eintauchen und dadurch die Energie eines Fußgängeraufpralls aufnehmen.

In einer weiterhin bevorzugten Ausgestaltung der Erfindung weisen die mindestens zwei Befestigungspunkte einen Abstand von mindestens einem Viertel, weiter bevorzugt von mindestens einem Drittel und besonders bevorzugt von mindestens der Hälfte der Gesamtbreite der Fronthaube auf. Vorteilhaft kann so eine sichere Halterung, insbesondere eine sichere Aufnahme von Torsionsbelastungen, der Fronthaube gewährleistet werden.

Die Beabstandung der mindestens zwei Befestigungselemente ermöglicht vorteilhaft eine weichere Auslegung von Außenhaut und Verstärkungselementen in dem Bereich dazwischen. So kann in diesem für Fußgängerkollisionen sehr relevanten Bereich eine zusätzliche Knautschzone geschaffen werden.

In einer weiteren bevorzugten Ausgestaltung sind Außenhaut, Verstärkungselemente und/oder die Schlossbrücke so ausgestaltet, dass im Bereich zwischen den Befestigungspunkten zumindest teilweise ein Abstand zwischen Außenhaut beziehungsweise Verstärkungselementen und der Schlossbrücke ausgebildet ist. Dieser Abstand dient vorteilhaft als weitere Knautschzone und ermöglicht eine homogene Kraftaufnahme durch Deformation der Außenhaut, ohne dass die Schlossbrücke die Deformation der Außenhaut stört. Vorteilhaft kann so der Fußgängerschutz weiter verbessert werden.

Die Schlossbrücke ist dabei bevorzugt ein längliches, trägerförmiges Bauteil, das in der Lage ist, Kräfte zwischen den Befestigungspunkten und dem Schlosselement zu übertragen. Dabei ist die Schlossbrücke bevorzugt möglichst flach, um den geringen Bauraum zwischen Fronthaube und beispielsweise darunter befindlicher Fahrzeugtechnik oder einem Kofferraum zu ermöglichen. In einer bevorzugten Ausgestaltung hat die Schlossbrücke einen u- oder wannenförmigen Querschnitt. Dabei ist die Schlossbrücke in ihren Endbereichen mit der Fronthaube verbunden, so dass sich im mittleren Bereich ein Abstand zwischen Fronthaube und Schlossbrücke einstellt, der eine Knautschzone für den Fußgängerschutz darstellt.

In einer alternativen Ausgestaltung kann die Schlossbrücke auch ein flächiges Element sein, das an mehr als zwei Befestigungspunkten mit der Außenhaut oder den Verstärkungselementen verbunden ist.

Weiterhin bevorzugt hat die Schlossbrücke Puffer für die Verbindung mit dem Fahrzeug. Diese Puffer stellen Auflagepunkte der Fronthaube im geschlossenen Zustand dar, so dass vorteilhaft die Fronthaube unbeweglich verankert ist und dynamische Anregungen nicht zu einem Flattern führen.

Bevorzugt ist die Schlossbrücke aus Stahl gefertigt. Stahl ist vorteilhaft kostengünstig. In einer alternativen Ausgestaltung kann die Schlossbrücke auch aus Kunststoff, insbesondere faserverstärktem Kunststoff, gefertigt sein. Neben einem vorteilhaft geringen Gewicht können zudem die Eigenschaften von Kunststoffbauteilen hervorragend eingestellt werden.

In einer besonders bevorzugten Ausgestaltung der Erfindung erfolgt die Verbindung der Schlossbrücke mit der Fronthaube mittels deformierbarer und/oder versagender Befestigungselemente. Diese deformierbaren und/oder versagenden Befestigungselemente sind dabei so ausgelegt, dass normale Lastzustände wie beispielsweise Windbelastungen oder Krafteinleitungen zum Öffnen und Schließen sicher abgefangen werden. Eine die normalen Lastzustände übersteigende Belastung führt zum Versagen der Befestigungselemente. Dieses Versagen kann dabei zu einer Deformation oder auch einer Zerstörung der Befestigungselemente führen und damit zu einer Beweglichkeit oder auch Deformierbarkeit der Fronthaube, die es vorteilhaft ermöglicht, Energie, beispielweise die Aufprallenergie eines Fußgängers, zu absorbieren.

Die Deformierbarkeit beziehungsweise das definierte Versagen der Befestigungselemente wird dabei beispielsweise durch die Materialauswahl und die Gestaltung der Befestigungselemente realisiert. So können beispielsweise die Befestigungselemente eine Sollbruchstelle aufweisen und/oder aus einem Material gefertigt sein, das bei einer bestimmten Belastung versagt.

Vorteilhaft kann so für den Lastfall einer Kollision, insbesondere mit einem Fußgänger, durch das Versagen oder die Deformation der Befestigungselemente eine die Kollisionsenergie absorbierende Struktur bereitgestellt werden. Diese Struktur kann Aufprallenergie aufnehmen und Fußgänger so vor Verletzungen schützen.

Die Befestigungselemente sind dabei bevorzugt aus Kunststoff, Stahl oder Aluminium gefertigt. Diese Materialien sind vorteilhaft gut auf eine Lastgrenze einstellbar und langlebig.

In einer weiteren bevorzugten Ausgestaltung ist das Schlosselement mittels deformierbarer und/oder versagender Bauteile mit der Schlossbrücke verbunden. So kann vorteilhaft die Deformierbarkeit der Fronthaube im Kollisionsfall und damit der Fußgängerschutz weiter verbessert werden.

In einer weiterhin bevorzugten Ausgestaltung ist das Schlosselement selbst ein deformierbares und/oder versagendes Bauteil. So kann vorteilhaft der Montageaufwand verringert werden.

Das erfindungsgemäße Kraftfahrzeug weist eine erfindungsgemäße Fronthaube auf.

Weitere bevorzugte Ausgestaltungen der Erfindung ergeben sich aus den übrigen, in den Unteransprüchen genannten Merkmalen.

Die verschiedenen in dieser Anmeldung genannten Ausführungsformen der Erfindung sind, sofern im Einzelfall nicht anders ausgeführt, mit Vorteil miteinander kombinierbar.

Die Erfindung wird nachfolgend in Ausführungsbeispielen anhand der zugehörigen Zeichnungen erläutert. Es zeigen:
- Figur 1: eine Fronthaube eines Fahrzeuges und eine Schlossbrücke und
- Figur 2: eine Ansicht der Innenseite einer Fronthaube mit Schlossbrücke.

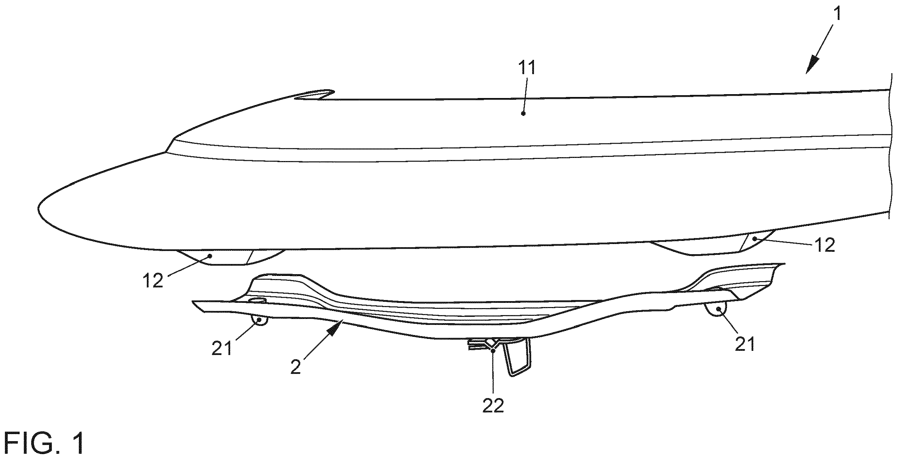

Figur 1 zeigt die Fronthaube 1 eines PKW mit einer Außenhaut 11 und eine Schlossbrücke 2. Schlossbrücke 2 und Fronthaube 1 sind noch nicht verbunden. Die Fronthaube 1 hat zwei Befestigungspunkte 12, an denen die Schlossbrücke 2 befestigt wird. Die Schlossbrücke 2 hat zwei Anschlagpuffer 21. Mittig zwischen den beiden Anschlagpuffern 21 hat die Schlossbrücke 2 ein Schlosselement 22. Im geschlossenen Zustand der Fronthaube 1 wird die Schlossbrücke 2 durch das Schlosselement 22 und die Anschlagpuffer 21 fixiert.

Die Anschlagpuffer 21 sind in den Endbereichen der Schlossbrücke 2 angeordnet. Die Schlossbrücke 2 ist derart geformt, dass zwischen den Anschlagpuffern 21, im Bereich des Schlosselementes 22, ein deutlicher Abstand zwischen der Außenhaut 11 der Fronthaube 1 und der Schlossbrücke 2 besteht.

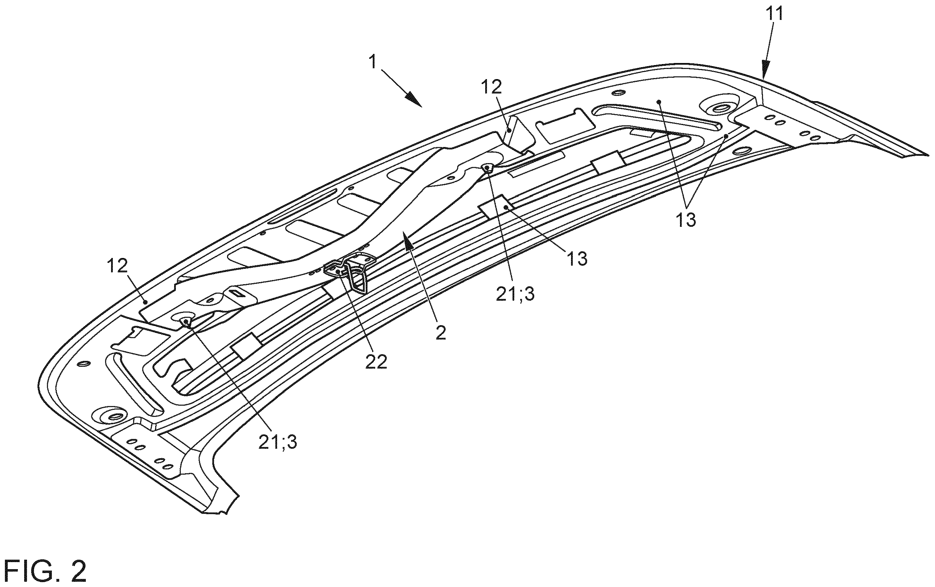

Figur 2 zeigt die Innenseite der Fronthaube 1. Innenseitig weist die Fronthaube 1 Verstärkungselemente 13 auf. Diese sind stoffschlüssig mittels Schweißen mit der Außenhaut 11 verbunden. Die Schlossbrücke 2 ist mit den Befestigungspunkten 12 der Fronthaube 1 über Befestigungsmittel 3, die in den Anschlagpuffern 21 angeordnet sind, befestigt.

Die Verstärkungselemente 13 sind im Bereich zwischen der Schlossbrücke 2 schwächer ausgebildet, um in diesem Bereich eine gute Deformierbarkeit der Außenhaut 11 der Fronthaube 1 zu ermöglichen.

### Bezugszeichenliste

- 1: Fronthaube
- 11: Außenhaut
- 12: Befestigungspunkte
- 13: Verstärkungselemente
- 2: Schlossbrücke
- 21: Anschlagpuffer
- 22: Schlosselement
- 3: Befestigungsmittel/Befestigungselemente

## Patentansprüche

1. Fronthaube (1) für eine Fahrzeug, umfassend eine Schlossbrücke (2), die sich quer zur Fahrzeuglängsrichtung erstreckt und ein Schlosselement (22) aufweist, wobei die Schlossbrücke (2) an mindestens zwei voneinander beabstandet angeordneten Befestigungspunkten (12) mit der Fronthaube (1) verbunden ist, **dadurch gekennzeichnet, dass** die Schlossbrücke (2) mindestens eine Sollbruchstelle aufweist.

2. Fronthaube (1) nach Anspruch 1, **dadurch gekennzeichnet, dass** die Schlossbrücke (2) mit der Fronthaube (1) mittels deformierbarer und/oder versagender Befestigungselemente (3) verbunden ist.

3. Fronthaube (1) nach Anspruch 2, **dadurch gekennzeichnet, dass** die Befestigungselemente (3) aus Kunststoff, Stahl oder Aluminium gefertigt sind.

4. Fronthaube (1) nach einem der vorangehenden Ansprüche, **dadurch gekennzeichnet, dass** der Abstand der mindestens zwei Befestigungspunkte (12) mindestens ein Drittel der Gesamtbreite der Fronthaube (1) beträgt.

5. Fronthaube (1) nach einem der vorangehenden Ansprüche, **dadurch gekennzeichnet, dass** das Schlosselement (22) mittels deformierbarer und/oder versagender Befestigungsmittel (3) mit der Schlossbrücke (2) verbunden ist.

6. Fronthaube (1) nach einem der vorangehenden Ansprüche, **dadurch gekennzeichnet, dass** das Schlosselement (22) ein deformierbares und/oder versagendes Bauteil ist.

7. Fronthaube (1) nach einem der vorangehenden Ansprüche, **dadurch gekennzeichnet, dass** die Schlossbrücke (2) in einem Bereich zur Fronthaube (1) beabstandet ist.

8. Fronthaube (1) nach einem der vorangehenden Ansprüche, **dadurch gekennzeichnet, dass** die Schlossbrücke (2) Anschlagpuffer (21) für die Verbindung mit dem Fahrzeug aufweist.

9. Kraftfahrzeug aufweisend eine Fronthaube (1) nach einem der vorangehenden Ansprüche.

## Claims

1. Front hood (1) for a vehicle, comprising a latch bar (2) which extends transversely to the vehicle longitudinal direction and comprises a latch element (22), the latch bar (2) being connected to the front hood (1) at at least two mutually spaced fastening points (12), **characterized in that** the latch bar (2) comprises at least one predetermined breaking point.

2. Front hood (1) according to claim 1, **characterized in that** the latch bar (2) is connected to the front hood (1) by means of deformable and/or failing fastening elements (3).

3. Front hood (1) according to claim 2, **characterized in that** the fastening elements (3) are made of plastic, steel or aluminum.

4. Front hood (1) according to any of the preceding claims,
**characterized in that** the spacing of the at least two fastening points (12) is at least one third of the total width of the front hood (1).

5. Front hood (1) according to any of the preceding claims,
**characterized in that** the latch element (22) is connected to the latch bar (2) by means of deformable and/or failing fastening means (3).

6. Front hood (1) according to any of the preceding claims,
**characterized in that** the latch element (22) is a deformable and/or failing component.

7. Front hood (1) according to any of the preceding claims,
**characterized in that** the latch bar (2) is spaced apart from the front hood (1) in one region.

8. Front hood (1) according to any of the preceding claims,
**characterized in that** the latch bar (2) comprises bump stops (21) for the connection to the vehicle.

9. Motor vehicle comprising a front hood (1) according to any of the preceding claims.

## Revendications

1. Capot frontal (1) pour un véhicule, comprenant un pont de serrure (2), qui s'étend transversalement à la direction longitudinale de véhicule et présente un élément de serrure (22), dans lequel le pont de serrure (2) est relié au niveau d'au moins deux points de fixation (12) agencés à distance l'un de l'autre avec le capot frontal (1), **caractérisé en ce que** le pont de serrure (2) présente au moins un point de rupture.

2. Capot frontal (1) selon la revendication 1, **caractérisé en ce que** le pont de serrure (2) est relié au capot frontal (1) au moyen d'éléments de fixation (3) déformables et/ou défaillants.

3. Capot frontal (1) selon la revendication 2, **caractérisé en ce que** les éléments de fixation (3) sont fabriqués en matière plastique, acier ou aluminium.

4. Capot frontal (1) selon l'une quelconque des revendications précédentes, **caractérisé en ce que** la distance des au moins deux points de fixation (12) est d'au moins un tiers de la largeur totale du capot avant (1).

5. Capot frontal (1) selon l'une quelconque des revendications précédentes, **caractérisé en ce que** l'élément de serrure (22) est relié au pont de serrure (2) au moyen de moyens de fixation (3) déformables et/ou défaillants.

6. Capot frontal (1) selon l'une quelconque des revendications précédentes, **caractérisé en ce que** l'élément de serrure (22) est un composant déformable et/ou défaillant.

7. Capot frontal (1) selon l'une quelconque des revendications précédentes, **caractérisé en ce que** le pont de serrure (2) est espacé dans une zone par rapport au capot frontal (1).

8. Capot frontal (1) selon l'une quelconque des revendications précédentes, **caractérisé en ce que** le pont de serrure (2) présente des tampons de butée (21) pour la liaison au véhicule.

9. Véhicule automobile présentant un capot frontal (1) selon l'une quelconque des revendications précédentes.
